# EUROPÄISCHE PATENTSCHRIFT

(11) **EP 1 059 475 B1**
(45) Veröffentlichungstag und Bekanntmachung des Hinweises auf die Patenterteilung: **14.05.2003**
(21) Anmeldenummer: 00111724.1
(22) Anmeldetag: 02.06.2000
(51) Int. Cl.: F16J 15/34, F16J 15/36

(54) **Gleitringdichtungsanordnung**
Mechanical seal arrangement
Garniture mécanique d'étanchéité

(30) Priorität: 10.06.1999 DE 29910079 U
(43) Veröffentlichungstag der Anmeldung: 13.12.2000
(73) Patentinhaber: Burgmann Dichtungswerke GmbH & Co. KG, 82515 Wolfratshausen (DE)
(72) Erfinder: Schulten, Berthold, 82538 Geretsried (DE)
(74) Vertreter: Schmidt, Horst, Dr.

(56) Entgegenhaltungen:
- US-A- 4 296 935
- US-A- 4 560 173
- US-A- 4 889 350
- US-A- 5 954 341

## Beschreibung

Die Erfindung betrifft eine Gleitringdichtungsanordnung gemäss dem Oberbegriff des Anspruches 1. Eine derartige Gleitringdichtungsanordnung ist aus US-A-4,560,173 bekannt.

Die Erfindung betrifft insbesondere eine Gleitringdichtungsanordnung mit einer Sperrfluidvorlage mit verbessertem Leckageschutz. Die Sperrfluidvorlage, die im allgemeinen bei doppelt wirkenden Gleitringdichtungsanordnungen vorgesehen wird, schafft eine Sicherheitsfunktion gegen eine Leckage des abzudichtenden Mediums an die Aussenumgebung, indem das Sperrfluid in einem Druckraum unter einem Druck gehalten wird, der etwas z.B. 10 % höher als der Druck des abzudichtenden Mediums sein kann, so dass eine Leckage nur in Richtung aus dem Druckraum in das abzudichtende Medium, jedoch nicht umgekehrt, stattfinden kann. Gleitringdichtungsanordnungen mit Sperrfluidvorlage eignen sich daher wegen ihres erhöhten Leckageschutzes zur Abdichtung von Gerätschaften, wie Pumpen, Rührwerken oder dgl., in denen umweltschädliche Medien, z.B. toxischer oder aggressiver Art behandelt werden. Diese Sicherheitsfunktion kann nur solange gewährleistet werden, wie die Sperrfluidvorlage ordnungsgemäss arbeitet. Bei einem Abfall des Druckes des Sperrfluides würde infolge des dann höheren Druckes des abzudichtenden Mediums dieses in den dem Sperrfluid vorbehaltenen Druckraum eindringen und von dort ggf. an die Aussenumgebung gelangen. Es wurde daher schon vorgeschlagen (vgl. Firmenschrift der Firma Flowserve Corp,. GX-200 Gas Barrier Seal for Standard Bore Seal Chambers, 5/1998, USA, Dallas, 222 West Las. Colinas Blvd), einen mit dem abzudichtenden Medium beaufschlagbaren Kolben vorzusehen, der bei einem Ausfall des Sperrfluiddruckes auf einen der stationären Gleitringe einer Tandemgleitringdichtungsanordnung einwirken kann, um die Gleitflächen der Gleitringe weiterhin in einer abdichtenden Beziehung zu halten. Abgesehen davon, dass die bekannte Gleitringdichtungsanordnung mit der erwähnten Sicherheitsfunktion aufgrund ihrer baulichen Abmessungen nur für bestimmte Anwendungsfälle geeignet ist, bei denen keine Einschränkungen hinsichtlich des Platzangebotes für die Unterbringung der Dichtung bestehen, besteht die Gefahr, dass die Sicherheitsfunktion durch Ablagerung von Fremdstoffen im Laufe der Betriebsdauer beeinträchtigt wird bzw. verlorengehen kann. Denn sämtliche im Hinblick auf die Sicherheitsfunktion wichtigen Bauteile der Dichtungsanordnung sind stationär gehalten, was die Ablagerung von Fremdstoffen naturgemäss erheblich begünstigt. Es besteht daher Bedarf nach einer gattungsgemässen Gleitringdichtungsanordnung, die hinsichtlich der Sicherheitsfunktion und der baulichen Abmessungen verbessert ist.

Der Erfindung liegt daher die Aufgabe zugrunde, eine Gleitringdichtungsanordnung der eingangs erwähnten Gattung zu schaffen, die eine Verringerung der baulichen Abmessungen soweit ermöglicht, dass diese, wenn erwünscht, in enge Stopfbuchsenräume eingebaut werden kann, und die ferner die Gewähr für die Aufrechterhaltung der Sicherheitsfunktion über verlängerte Betriebszeiten bietet.

Diese Aufgabe wird erfindungsgemäss durch die Merkmale im kennzeichnenden Teil des Anspruches 1 gelöst. Danach ist der rotierende Gleitring der Gleitringdichtungsanordnung nach der Erfindung über ein Balgelement, z.B. in Gestalt eines Metallfaltenbalges, mit einem Mitnehmerring verbunden, der auf der Welle bzw. einer darauf aufgesetzten Buchse nicht ortsfest, sondern axial beweglich angeordnet ist. Der Mitnehmerring, das Balgelement und der Gleitring sind somit rotierende, in ihrer gegenseitigen axialen Lagebeziehung nicht festgelegte Bauteile, so dass eventuelle Ablagerungen von Fremdpartikeln an diesen Teilen sowohl durch die herrschenden Fliehkräfte als auch Axialbewegungen der Teile während des Betriebes permanent aufgerissen und entfernt werden. Der vom Balgelement umschlossene Raum steht mit einem vom Sperrfluid beaufschlagten Druckraum in Fluidverbindung, was den rotierenden Gleitring unter normalen Betriebsbedingungen mit einer geeigneten hydraulischen Vorspannkraft beaufschlägt, um zwischen den Gleitflächen der zusammenwirkenden Gleitringe, insbesondere im Zusammenwirken mit förderwirksamen Strukturen in den Gleitflächen, einen Dichtspalt in Gestalt eines Sperrfluidpolsters zu schaffen und dabei eine Leckage nur vom Druckraum in das abzudichtende Medium, jedoch nicht umgekehrt, zu ermöglichen. Bei einem Abfall des Sperrfluiddruckes und damit auch des Druckes in dem vom Balgelement umschlossenen Raum wirkt dagegen der Druck des abzudichtenden Mediums auf den axial beweglichen Mitnehmerring dergestalt, dass dieser in Richtung auf den damit zusammenwirkenden rotierenden Gleitring verschoben wird. Im Zuge dieser Bewegung kommt ein z.B. am Mitnehmerring vorgesehenes Anschlagelement in Anlage mit dem Gleitring, so dass auf den Gleitring eine Axialkraft ausgeübt wird, die diesen gegen den betreffenden stationären Gleitring drückt. Eine übermässige Öffnung des Dichtspaltes zwischen den Gleitflächen infolge des Abfalles des Sperrfluiddruckes wird dadurch vermieden. Unter den beschriebenen nicht normalen Betriebsbedingungen arbeitet die Gleitringdichtungsanordnung vielmehr weiter wie eine aussendruckbeaufschlagte Anordnung und gewährleistet so, dass in den Druckraum keine übermässige Leckage an abzudichtendem Medium eindringen kann. Die baulichen Abmessungen des Mitnehmerringes, Balgelementes und Gleitringes können ohne weiteres aufgrund des Aufbaus der Gleitringdichtungsanordnung soweit minimiert werden, dass sich diese für den Einbau in enge Stopfbüchsenräume auslegen lässt. Bezüglich Weiterbildungen der Erfindung wird auf die Ansprüche verwiesen.

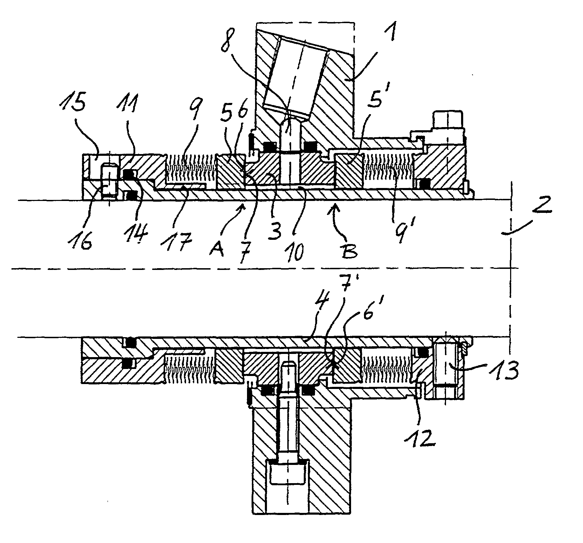

Die Erfindung wird nachfolgend anhand der Zeichnung, die eine Ausführungsform einer erfindungsgemäss aufgebauten Gleitringdichtungsanordnung in geschnittener schematischer Ansicht in einer normalen Betriebsstellung zeigt, näher beschrieben.

Die Gleitringdichtungsanordnung nach der Erfindung umfasst ein an einem Gehäuse 1 drehgesichert, koaxial zu einer Welle 2 gehaltenes und gegenüber dem Gehäuse 1 in geeigneter, grundätzlich bekannter Weise abgedichtetes Gleitringdoppelstück 3 sowie ein Paar auf der Welle 2 bzw. einer darauf aufgesetzten Buchse 4 zur gemeinsamen Drehung mit dieser angeordneter axial beabstandeter Gleitringe 5, die mit dem Gleitringdoppelstück 3 zusammenwirken.

Das drehfeste Gleitringdoppelstück 3 hat in entgengesetzte axiale Richtungen weisende radiale oder im wesentlichen radiale Gleitflächen 6, mit denen komplementär ausgerichtete Gleitflächen 7 der rotierenden Gleitringe 5 unter Bildung eines Paares axial beabstandeter Gleitringpaarungen A, B zusammenwirken, von denen im folgenden nur eine (in der Zeichnung linksseitige) Paarung A näher beschrieben wird. Die andere Gleitringpaarung B ist im wesentlichen identisch ausgebildet mit einer Ausnahme, worauf später noch eingegangen wird.. In wenigstens einer der zusammenwirkenden Gleitflächen 6, 7, vorzugsweise in der des drehfesten Gleitringdoppelstücks 3, können förderwirksame Strukturen oder Nuten (nicht gezeigt) mit Pumpwirkung eingebracht sein, um bei Drehung der Welle 2 ein Gas oder eine Flüssigkeit zwischen die Gleitflächen 6, 7 zu pumpen und dazwischen einen Druck aufzubauen, der eine Trennung der Gleitflächen unter Schaffung eines durch ein Gas- oder Flüssigkeitspolster gebildeten Dichtspaltes bewirkt. Die förderwirksame Strukturen oder Nuten sind vorzugsweise so in die Gleitflächen 6, 7 eingebracht, dass sie eine Pumpwirkung in Richtung vom inneren zum äusseren Umfang der Gleitflächen entfalten.

In einen aussenumfänglich durch das drehfeste Gleitringdoppelstück 3 und axial durch die damit zusammenwirkenden rotierenden Gleitringe 5 begrenzten Druckraum 10 kann ein Sperrfluid über eine im Gehäuse 1 vorgesehene Zuführpassage 8 eingeführt werden. Das Sperrfluid wird unter normalen Betriebsbedingungen im Druckraum 10 mittels einer externen Druckquelle (nicht gezeigt) unter einem Druck, der wenigstens gleich, vorzugsweise etwas grösser als der des abzudichtenden Mediums ist, gehalten, um eine eventuelle Leckageströmung vom Druckraum 10 in das abzudichtende Medium zu ermöglichen, jedoch in umgekehrter Richtung auszuschliessen. Beim Sperrfluid kann es sich um, vorzugsweise mit dem abzudichtenden Medium verträgliche, Flüssigkeiten oder Gase handeln. Bezüglich weiterer Details zum Aufbau eines Sperrfluidsystems kann auf Burgmann, ABC der Gleitringdichtung, 1988, Selbstverlag, S. 226-227 verwiesen werden.

Der rotierende Gleitring 5 ist ferner gegen das drehfeste Gleitringdoppelstück 3 mit einer geeigneten Vorspannkraft vorgespannt, so dass die Gleitflächen 6, 7 bei Stillstand der Welle 2 in dichtendem Eingriff miteinander gehalten sind. Die Vorspannkraft wird aufgebracht durch ein Balgelement 9, bei dem es sich vorzugsweise um einen Metallfaltenbalgelement handelt, das einerends an einem an der Welle 2 montierten Mitnehmerring 11 und anderenends am rotierenden Gleitring 5, vorzugsweise durch Anschweissen, hermetisch dicht befestigt ist. Die Drehbewegung der Welle 2 wird deshalb über den Mitnehmerring 11 und das Balgelement 9 auf den Gleitring 5 übertragen. Bezüglich näherer Aufbaumerkmale eines bevorzugten Balgelementes in Gestalt eines Metallfaltenbalgelement kann z.B. auf Burgmann, ABC der Gleitringdichtung, a.a.O, S. 153 verwiesen werden. Andere Arten von Balgelementen können ebenfalls vorgesehen werden

Vorzugsweise besteht der rotierende Gleitring 5 aus einem geeigneten metallischen schweissbaren Material, wie Stahl, was eine direkte Schweissverbindung mit dem Balgelement 9 ermöglicht. Die Erfindung ist jedoch weder auf eine Verbindung zwischen dem Balgelement und dem rotierenden Gleitring durch Schweissen, noch auf die beschriebene Materialauswahl beschränkt.

An der dem drehfesten Gleitringdoppelstück 3 zugewandten Stirnfläche des Gleitringes 5 kann eine Beschichtung aus einem geeigneten verschleissfesten Material wie Wolframkarbid, Siliziumkarbid, Aluminiumoxid oder Chromoxid vorgesehen sein, die nach bekannten Aufdampfverfahren, die hier nicht näher beschrieben werden brauchen, mit einer Dicke von z.B. zwischen etwa 0,1 und 0,5 mm aufgebracht sein können. Das drehfeste Gleitringdoppelstück 3 kann ähnlich wie der rotierende Gleitring 5 aufgebaut sein, indem eine die Gleitflächen 6 bildende Beschichtung aus einem verschleissfesten Material daran vorgesehen ist. Die Beschichtung könnte auch aus einem Material mit Notlaufeigenschaft, wie Kohlenstoff bestehen. Das drehfeste Gleitringdoppelstück 3 könnte auch insgesamt aus einem verschleissfesten, tribologisch wirksamen Material gebildet sein.

Die Gleitringpaarungen A, B unterscheiden sich im wesentlichen nur in der Art und Weise voneinander, wie die betreffenden rotierenden Gleitringe zur gemeinsamen Drehung mit der Welle 2 bzw. Buchse 4 montiert sind. Gleiche Teile der Gleitringpaarung B wie bei der Gleitringpaarung A tragen daher gleiche Bezugszeichen, zusätzlich versehen mit einem Hochstrich, und brauchen nicht erneut beschrieben zu werden.

Bei der in der Zeichnung rechtsseitigen Gleitringpaarung B ist auf der Buchse 4 ein dagegen durch einen O-Ring oder dgl. abgedichteter Mitnehmerring 12 angeordnet, an dem das betreffende Balgelement 9', z.B. durch Anschweissen, hermetisch dicht befestigt ist. Der Mitnehmerring 12 ist mittels einer darin eingelassenen Madenschraube 13 oder dgl., die sich durch die Buchse 4 zur Eingriffnahme mit der Welle 2 erstreckt, drehmomentübertragend gegenüber der Welle 2 positioniert. Gleichzeitig wird hierdurch die Buchse 4 in Bezug auf die Welle 2 festgelegt.

Zur Positionierung des Gleitringes 5 der in der Zeichnung linksseitigen Gleitringpaarung A ist auf der Buchse 4 ein Mitnehmerring 11 mit einem Langloch 15 vorgesehen, dessen längere Achse sich in Richtung der Mittellängsachse der Gleitringdichtungsanordnung erstreckt. Von der Buchse 4 steht radial ein Mitnehmerstift 16 nach aussen ab, der in das Langloch 15 des Mitnehmerringes 11 eingreift. Der Mitnehmerstift 16 hat eine geringere Abmessung als die axiale Abmessung des Langloches 15, so dass der Mitnehmerring 11 innerhalb der Begrenzungen des Langloches 15 axial relativ zur Buchse 4 verschieblich ist. Zwischen dem Mitnehmerring 11 und der Buchse 4 ist eine Dichtung, vorzugsweise in Gestalt eines O-Ringes 14 vorgesehen, der in einer Ringnut im Mitnehmerring 11 einliegt. Es können, wenn erwünscht, auch mehrere umfänglich verteilt angeordnete Langlöcher 15 im Mitnehmerring 11 vorgesehen sein, die mit entsprechend angeordneten Mitnehmerstiften 16 zuseammenwirken können.

Vom Mitnehmerring 11 steht ein Anschlagelement in Gestalt einer rohrförmigen, koaxial zur Welle 2 sich erstreckenden Verlängerung 17 über eine axiale Strecke in Richtung auf den Gleitring 5 ab, die geringer als die axiale Abmessung des Balgelementes 9 in einer Betriebsstellung ist, bei der der Mitnehmerstift 16 an dem dem Balgelement 9 zugewandten axialen Ende des Langloches 15 anliegt. Statt durch die Eingriffnahme des Mitnehmerstiftes 16 mit dem betreffenden Ende des Langloches 15 könnte eine axiale Lagepositionierung des Mitnehmerringes 11 auch durch die Anlage einer Schulter am Mitnehmerring 11 mit einer Schulter and der Buchse 4 erfolgen, wie dies in der Zeichnung gezeigt ist. Das Langloch 15 könnte an dem vom Balgelement 9 abgewandten axialen Ende, wenn erwünscht, statt axial geschlossen auch offen ausgebildet sein.

Die rohrförmige Verlängerung oder das Anschlagelement 17 ist zwischen dem Balgelement 9 und der Buchse 4 angeordnet und umgibt letztere in gleitbeweglicher Beziehung. Sie hat ein freies äusserer Ende, das in Anlage mit der zugewandten Stirnfläche des Gleitringes 5 treten kann, um zwischen diesen Teilen eine eine Axialkraft übertragende Beziehung unter Umgehung des Balgelementes 9 bei einer nachfolgend beschriebenen Betriebsbedingung herzustellen, die ohne die erfindungsgemässen Massnahmen zu einer übermässigen Vergrösserung des Spaltes zwischen den Gleitflächen 6, 7 und damit Leckage des abzudichtenden Mediums in den Druckraum 10 führen könnte.

Das Anschlagelement 17 könnte, wenn erwünscht, auch am Gleitring 5 vorgesehen sein, um in Anlage mit der zugewandten Endfläche des Mitnehmeringes 11 zu treten. Das Anschlagelement 17 könnte ferner in Form einer Vielzahl umfänglich der Buchse 4 verteilter Anschlagfinger statt in Rohrform ausgebildet sein.

Unter normalen Betriebsbedingungen steht im Druckraum 10 der Druck des darin befindlichen Sperrfluides an, um zu bewirken, dass eine Leckageströmung längs des Dichtspaltes zwischen den Gleitflächen 6, 7 nur in einer Richtung, nämlich vom Druckraum 10 zu aussenumfänglichen Bereichen des Dichtspaltes stattfinden kann, d.h. in Richtung auf das abzudichtende, z.B. toxische Medium. Der Druck des Sperrfluides im Druckraum 10 ist zu diesem Zweck so eingestellt, dass er stets wenigstens gleich, vorzugsweise etwas höher als der Druck des abzudichtenden Mediums in dem davon beaufschlagten Bereich aussenumfänglich der Gleitringpaarung A ist. Unter diesen Betriebsbedingungen wirkt ein Differenzdruck in dem vom Balgelement 9 umgrenzten Raum, was den Mitnehmerring 11 in der Zeichnung nach links verschiebt, bis der Mitnehmerstift 16 gegen das eine oder innere Ende des Langloches 16 (oder die Schulter am Mitnehmerring 11 gegen die Schulter an der Buchse 2) anstösst und dadurch eine weitere axiale Bewegung des Mitnehmerringes 11 verhindert wird. Diese Position des Mitnehmerringes 11 ist in der Zeichnung gezeigt und wird auch bei Stillstand der Welle 2 eingenommen, solange im Druckraum 10 ein ausreichender Druck des Sperrfluides ansteht.

Bei einem nicht normalen Betriebszustand infolge eines Druckabfalls des Sperrfluides im Druckraum 10 unterhalb des Druckes des abzudichtenden Mediums wird sich der Mitnehmerring 11 unter einem dann von aussen einwirkenden Differenzdruck relativ zur Buchse 4 in der Zeichnung nach rechts bewegen, bis das Anschlagelement 17 in Anlage mit dem Gleitring 5 tritt und dadurch eine starre, Axialkraft übertragende Beziehung zwischen dem Mitnehmerring 11 und dem Gleitring 5 zustande gekommen ist. Durch einen von aussen wirkenden hydraulischen Differenzdruck, der höher als ein seitens des Sperrfluides auf den Mitnehmerring 11 ausgeübter Differendruck ist, wird der Gleitring 5 durch den Mitnehmerring 11 mit einer entsprechenden Kraft gegen das drehfeste Gleitringdoppelstück 3 gedrückt und dadurch ein übermässiges Öffnen des Dichtspaltes vermieden. Es wirddamit wirksam der Gefahr begegnet, dass eine Leckage an abzudichtendem Medium in den Druckraum 10 und damit ggf. an die Aussenumgebung gelangen kann. Die Gleitringpaarung A kann unter diesen Bedingungen als nunmehr aussenumfänglich druckbeaufschlagte Anordnung angesehen werden.

Die Erfindung wurde vorausgehend anhand einer Ausführungsform beschrieben, bei der der Druckraum durch zwei Gleitringpaarungen A, B sowohl an der produktzu- als auch - abgewandten Seite begrenzt ist. Die Gleitringpaarungen A, B können dabei sowohl in Tandemals auch in Rücken-an-Rückenanordnung, wie dargestellt, vorgesehen sein. Die produktabgewandte Gleitringpaarung B kann, wenn erwünscht, auch weggelassen oder durch eine andere den Druckraum fluiddicht begrenzende geeignete Dichtungsanordnung ersetzt werden. Schliesslich könnte das Anschlagelement statt, wie vorbeschrieben, innerhalb auch ausserhalb des vom Balgelement umschlossenen Bereichs vorgesehen sein.

## Patentansprüche

1. Gleitringdichtungsanordnung mit wenigstens einer Gleitringpaarung (A,B), die einen gegenüber einem stationären Bauteil drehgesichert montierbaren Gleitring (3) und einen an einem rotierenden Bauteil zur gemeinsamen Drehung mit diesem montierbaren Gleitring (5,5') umfasst, einer Sperrfluidvorlage mit einem an der einem abzudichtenden Medium abgewandten Seite der Gleitringpaarung vorgesehenen Druckraum (10), in den ein Sperrfluid mit einem im wesentlichen wenigstens gleichen oder höheren Druck als der des abzudichtenden Mediums einführbar ist, und einer Mitnehmeranordnung zur Übertragung eines Drehmomentes vom rotierenden Bauteil auf den betreffenden Gleitring (5), welche einen am rotierenden Bauteil montierbaren Mitnehmerring (11) und ein zwischen dem Mitnehmerring (11) und dem Gleitring (5) sich erstreckendes, endseitig daran fluiddicht befestigtes Balgelement (9) umfasst, dessen Innenraum mit dem Druckraum (10) in Fluidverbindung steht, **dadurch gekennzeichnet, dass** der Mitnehmerring (11) anschlagbegrenzt axialrelativbeweglich zum rotierenden Bauteil gehalten ist, wobei eine der beiden axialen Anschlagbegrenzungen durch ein an entweder dem Mitnehmerring oder dem betreffenden Gleitring (5) vorgesehenes, mit dem betreffenden anderen Teil im Zuge einer Axialbewegung des Mitnehmerringes in Richtung auf den Gleitring in Eingriff bringbares Anschlagelement (17) gebildet ist.

2. Dichtungsanordnung nach Anspruch 1, **dadurch gekennzeichnet, dass** der Mitnehmerring (11) wenigstens ein Langloch (15) aufweist, in das ein drehfest zum rotierenden Bauteil angeordneter Stift (16) zur Schaffung der anderen axialen Anschlagbegrenzung eingreift.

3. Dichtungsanordnung nach Anspruch 1 oder 2, **dadurch gekennzeichnet, dass** das Anschlagelement (17) am Mitnehmerring (11) vorgesehen ist.

4. Dichtungsanordnung nach einem der vorhergehenden Ansprüche, **dadurch gekennzeichnet, dass** das Anschlagelement (17) eine rohrförmige Konfiguration hat.

5. Dichtungsanordnung nach einem der vorhergehenden Ansprüche, **dadurch gekennzeichnet, dass** das Anschlagelement (17) eine axiale Abmessung hat, die kleiner als der axiale Abstand zwischem dem Mitnehmerring (11) und dem Gleitring (5) ist, wenn sich der Mitnehmerring in einer durch die andere Anschlagbegrenzung bestimmten Position befindet.

6. Dichtungsanordnung nach einem der vorhergehenden Ansprüche, **dadurch gekennzeichnet, dass** das Anschlagelement (17) in einem vom Balgelement (9) umschlossenen Raum angeordnet ist.

## Claims

1. A face seal device including at least one pair (A,B) of seal rings comprising a seal ring (3) for mounting in non-rotational manner to a stationary component and a seal ring (5, 5') for mounting to a rotary component for common rotation therewith, a buffer fluid system comprising a pressure chamber (10) at the side of the pair of seal ring remote from the medium to be sealed, into which pressure chamber a buffer fluid can be introduced at a pressure at least essentially equal to or higher than that of the medium to be sealed, and a driving means for transmitting torque from the rotary component to said seal ring (5), said driving means comprising a driving ring (11) for mounting to the rotary component and a bellows member (9) extending between the driving ring (11) and said seal ring (5), said bellows member being fixed at the ends thereof to the driving ring and seal ring in fluid-tight manner, the interior of said bellows member being in fluid communication with the pressure chamber (10), **characterised in that** said driving ring (11) being axially moveable in stop-limited manner relative to said rotary component, whereby one of two axial stops is formed by a stop member (17) provided either on the driving ring or on the corresponding seal ring (5) and being adapted to be moved into engagement with the other part in the course of an axial movement of the driving ring towards the seal ring.

2. The seal device according to claim 1, **characterised in that** the driving ring (11) comprises at least one slot-like hole (15) in which a pin (16) disposed in non-rotatable manner relative to said rotary component engages for providing the other axial stop.

3. The seal device according to claim 1 or 2, **characterised in that** said stop member (17) is provided on the driving ring (11).

4. The seal device according to any of the preceding claims, **characterised in that** said stop member (17) has a tubular configuration.

5. The seal device according to any of the preceding claims, **characterised in that** said stop member (17) has an axial dimension which is smaller than the axial spacing between the driving ring (11) and the seal ring (5) when the driving ring is in a position determined by the other stop limit.

6. The seal device according to any of the preceding claims, **characterised in that** the stop member (17) is disposed in a space surrounded by the bellows member (9).

## Revendications

1. Dispositif d'étanchement à bagues coulissantes comprenant au moins une paire de bagues coulissantes (A, B) qui comporte une bague coulissante (3) pouvant être montée de façon à être fixe en rotation par rapport à une pièce fixe et une bague coulissante (5, 5') pouvant être montée sur une pièce rotative de manière à tourner en même temps que cette dernière, comprenant également un obturateur à fluide d'arrêt doté d'une chambre sous pression (10) prévue du côté de la paire de bagues coulissantes qui est opposé au fluide à étancher, dans laquelle peut être introduit un fluide d'arrêt dont la pression est pour l'essentiel au moins égale sinon supérieure à la pression du fluide à étancher, ainsi qu'un dispositif d'entraînement pour transmettre un couple de la pièce rotative à la bague coulissante correspondante (5), qui est composé dune bague d'entraînement (11) pouvant être montée sur la pièce rotative et d'un élément à soufflet (9) s'étendant entre la bague d'entraînement (11) et la bague coulissante (5), qui est fixé de façon étanche à l'extrémité de cette dernière et dont l'espace intérieur communique avec la chambre sous pression (10), **caractérisé en ce que** la bague d'entraînement (11) est maintenue de façon à pouvoir effectuer par rapport à la pièce rotative un déplacement relatif axial limité par des butées, sachant que l'une des deux butées de limitation est formée par un élément de butée (17) prévu soit sur la bague d'entraînement, soit sur la bague coulissante correspondante (5), qui peut être mis en prise avec l'autre pièce correspondante au cours d'un mouvement axial de la bague d'entraînement vers la bague coulissante.

2. Dispositif d'étanchement à bagues coulissantes selon la revendication 1, **caractérisé en ce que** la bague d'entraînement (11) présente au moins un trou oblong (15) dans lequel vient se loger un ergot (16) fixe en rotation par rapport à la pièce rotative, afin de former l'autre butée de limitation axiale.

3. Dispositif d'étanchement à bagues coulissantes selon la revendication 1 ou 2, **caractérisé en ce que** l'élément de butée (17) est prévu sur la bague d'entraînement (11).

4. Dispositif d'étanchement à bagues coulissantes selon l'une des revendications précédentes, **caractérisé en ce que** l'élément de butée (17) a une forme tubulaire.

5. Dispositif d'étanchement à bagues coulissantes selon l'une des revendications précédentes, **caractérisé en ce que** l'élément de butée (17) possède une dimension axiale qui est inférieure à l'écart axial entre la bague d'entraînement (11) et la bague coulissante (5) lorsque la bague d'entraînement se trouve dans une position déterminée par l'autre butée de limitation.

6. Dispositif d'étanchement à bagues coulissantes selon l'une des revendications précédentes, **caractérisé en ce que** l'élément de butée (17) est placé dans un espace entouré par l'élément à soufflet (9).
